# EUROPEAN PATENT APPLICATION

(11) **EP 3 101 293 A1**
(43) Date of publication of application: **07.12.2016**
(21) Application number: 15001664.0
(22) Date of filing: 03.06.2015
(51) Int. Cl.: F16C 33/66, F16C 33/78, F16C 33/80

(54) **LABYRINTH SEAL FOR RAILWAY GEARBOXES**

(71) Applicant: Sockeel, Norbert, 8310 Brugge (BE)
(72) Inventor: Sockeel Norbert, 8310 BRUGGE (BE)
(74) Representative: Marchau, Michel F.L.A.

(57) **Abstract**

The present invention relates to a sealed bearing assembly, in particular a bearing assembly suited for being used in railway carriages. The sealed bearing assembly comprises a throw-off bushing (10) press-fitted around a driven axle of a railway carriage. Circular rims (11) are provided on the throw-off bushing and leakage oil is thrown off by these rims into grooves (12) surrounding the throw-off bushing.

## Description

### Technical field of the invention

The present invention relates to a sealed bearing assembly, in particular a bearing assembly suited for being used in railway carriages.

### Background of the invention

Different sealed bearings for railway carriages are known. A typical sealed bearing device for a traction electric motor is described in the patent application DE 10 2012215967(SKF). This bearing device comprises an inner ring and an outer ring, whereby rolling elements are arranged between the inner and the outer ring. A spinner disk is connected to the inner ring, extending in a radial direction from the inner ring. A labyrinth seal structure is connected with the spinner disk and forms a labyrinth seal with the outer ring. An O-ring is arranged between the labyrinth seal and the outer ring.

DE 10 2012219 (SKF) illustrates another sealed bearing device. This bearing arrangement has a rolling bearing, arranged between an inner ring and an outer ring. A sealing has a closure element, which is connected fixedly with one of the two rings. A seal washer is connected fixedly with the other of the two rings. A labyrinth seal is formed between the closure element and sealing washer. An oil sump is arranged in a base area of a rolling body between one of the bearing rings and the closure element.

All known sealed bearings present a certain amount of oil losses and need a rather high number of spare parts.

### Summary of the invention

It is an object of the present invention to provide an improved sealed bearing having very low loss of oil and built up by a limited number of spare parts.

This object is achieved by an improved sealed bearing assembly comprising an outer ring and an inner ring of the bearing. The sealed bearing assembly further comprises a throw-off bushing, arranged coaxially with the inner ring, the throw-off bushing and the inner ring being suited to accept an axle. One or more circular rims are provided on the throw-off bushing and one or more circular grooves are provided in the part of the sealed bearing assembly surrounding at least partially the throw-off bushing. Each of the one or more circular grooves is provided in front of a corresponding rim.

Each of the one or more grooves may be provided with a pocket, the pockets communicating with a draining hole.

The one or more rims may have a triangular section.

The one or more rims may form a labyrinth together with the one or more grooves.

An O-ring may be provided between a fixed part of the sealed bearing assembly and the inner ring.

A slight non-parallelism may be provided between the exterior surface of the throw-off bushing and the interior surface of the opening in a fixed part of the sealed bearing assembly, receiving the throw-off bushing (10).

### Brief description of the drawings

Figure 1 illustrates the section of an embodiment of the bearing assembly according to the invention.

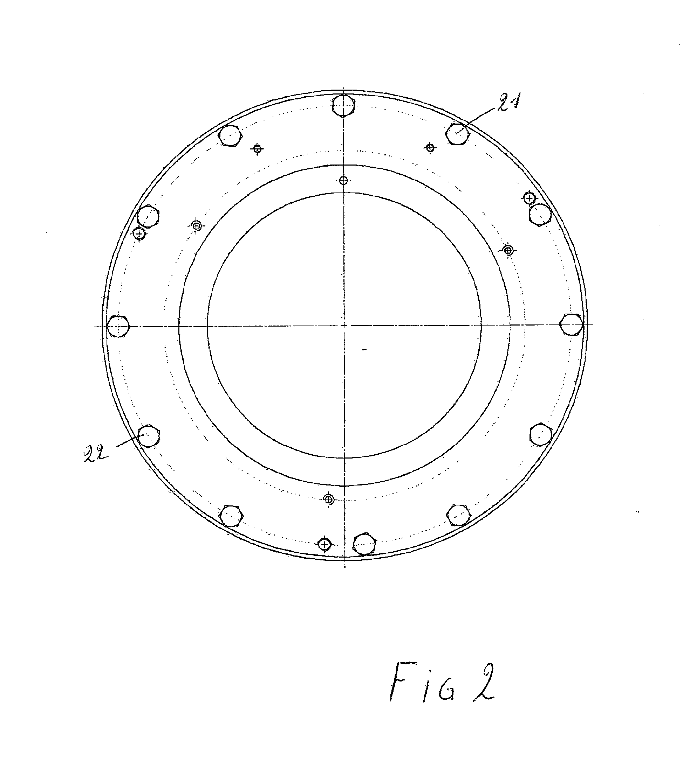

Figure 2 shows a sideview of the sealed bearing assembly.

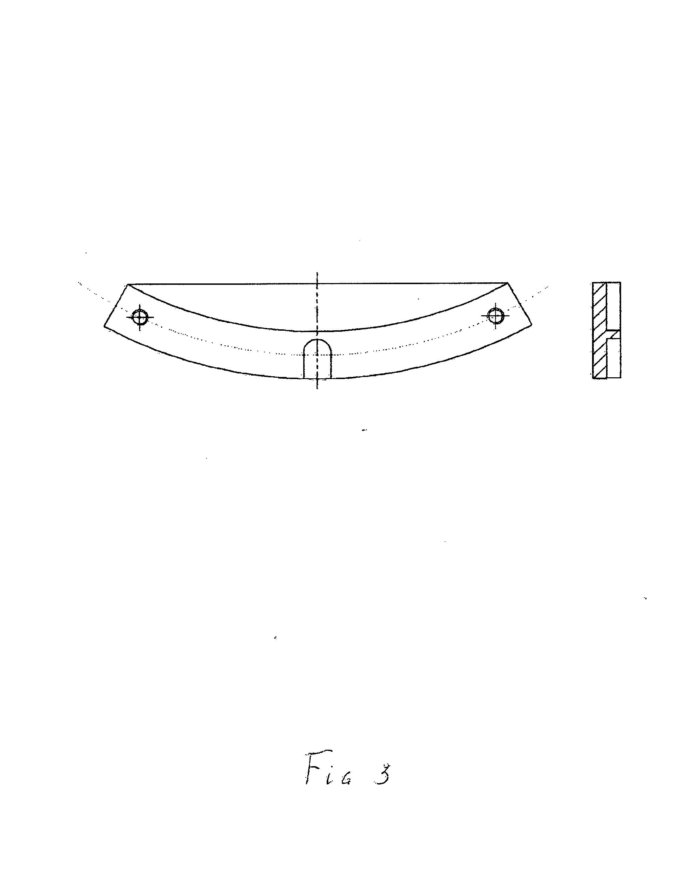

Figure 3 shows a detailed view of the draining and initial lubricating part.

### Description of illustrative embodiments

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes. The dimensions and the relative dimensions may not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

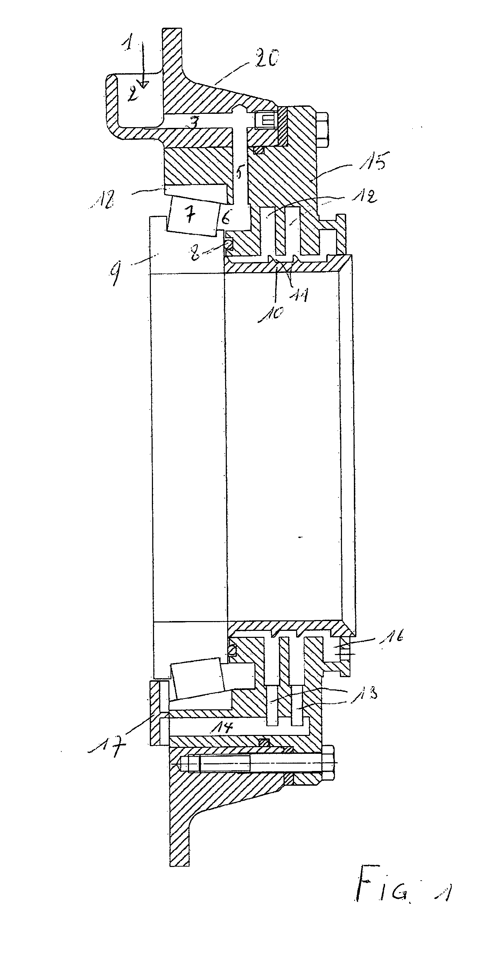

The sealed bearing assembly according to an embodiment of the present invention comprises a housing (20), a bearing bush (15) which holds the bearing (7), a draining and initial lubricating part (17) and an oil throw-off bushing (10). The housing, the bearing bush and the draining and initial lubricating part are all fixed parts of the sealed bearing assembly. An outer bearing ring (18) and an inner bearing ring (9) are located within the bearing bush, whereby the outer bearing ring (18) is rotationally fixed to the bearing bush (15). The bearing (7) itself is arranged between the inner and the outer bearing ring. The bearing (7) shown in figure 1 is a tapered roller bearing, but the invention can be used with another kind of bearing, e.g. a ball bearing, a straight roller bearing, etc. An oil pan (2) is arranged on the main part of the housing. The bearing bush (15) is tightly fixed with a number of bolts (21) to the housing. The bolts are arranged in a regular pattern, one of them (22) however being located in an irregular way in order to avoid an incorrect mounting.

An O-ring (8) or any other sealing element is located between the inner bearing ring (9) and the bearing bush, the O-ring being preferably glued in a groove provided in the bearing bush. According to the embodiment shown in Figure 1, within the bearing bush (15) the oil throw-off bushing (10) is located coaxially with the inner bearing ring (9) and in the prolongation of this inner bearing ring. The inner bearing ring and the throw-off bushing are dimensioned in a way that they can accept an axle (not shown), e.g. a driven axle of a railway carriage. The inner bearing ring and the throw-off bushing are press fit on the axle so that the axle on one hand and the inner bearing ring and the throw-off bushing are rotating together. On its circumference, the throw-off bushing (10) is provided with one or more circular rims (11), extending in a radial direction towards the part of the bearing bush surrounding the throw-off bushing. These rims may have a triangular section. Circular grooves (12) are provided in the part of the bearing bush (15) surrounding the throw-off bushing in front of the rims. At their lower part these grooves are provided with pockets (13) which are communicating with a draining hole (14) in the bearing bush. Draining hole (14) is communicating with a draining and initial lubricating part (17), in which the oil is collected. A water draining device (16) is also provided in the bearing bush in order to remove entering water.

The sealed bearing assembly of Figure 1 may be further improved by providing a slight non-parallelism between the exterior surface of the throw-off bushing and the interior surface of the opening in the bearing bush, receiving the throw-off bushing (10), said interior surface having a general cylindrical form. In order to get this non-parallelism, the general form of said exterior surface may be slightly conical with, between two successive rims, an increasing diameter of said exterior surface in the direction of the inner bearing ring (9), whereby the conical form is repetitive between successive rims. Good results have been achieved by giving the exterior surface of the throw-off bushing an inclination of 1,5° with respect to the mentioned interior surface.

The gap between the inner bearing ring (9) and the bearing bush is 0,1-0,2 mm. The gap between the rims of the throw off bushing and the bearing bush is also 0,1 - 0,2 mm.

When assembling, first the bearing clearance is adjusted and afterward the O-ring (8) is installed.

The way the lubricating of the bearing is performed can be explained as follows:
Oil (1) is captured at the inner wall of the housing in oil pan (2), than it is flowing through oil channel (3) and (5) and then from channel (5) to the lubricating chamber (6). There the oil is consumed by the tapered roller bearing (7). The O-ring (8) or every other sealing element avoids oil leaking. Under new conditions, the O-ring may be pressed against the inner bearing ring on one hand and against its groove on the other hand. The O-ring, has itself a diameter of 5 mm and a depth measured from the surface of the inner bearing ring of 4,5 mm.
After a while, there will be no contact any longer between the O-ring (8) and the inner bearing ring (9) because of wear. The remaining gap between O-ring (8) and the inner bearing ring (9) will be 0 - 0,05 mm. Oil escaping through this gap will be thrown off by the throw-off bushing (10) and collected in the grooves (12), where it is captured in the pockets (13) and drained via draining hole (14).
There the oil is entering the draining and initial lubricating part (17), which allows a continuous oil flow to the rollers of the tapered roller bearing.

The tapered roller bearing may be based on a standard bearing, however with smaller inner diameter.

The foregoing presentation of the described embodiment is provided to enable any person skilled in the art to make or use the present invention. Various modifications to this embodiment are possible, and the generic principles presented herein may be applied to other embodiments as well. For example, an embodiment may be implemented in part or in whole by providing an assembly comprising more than the three parts, shown in Figure 1 or by an assembly having less than three parts. Essential characteristics of the sealed bearing according to the invention is the provision of a throw-off bushing provided with one or more rims cooperating with one or more grooves, arranged in front of these rims in a fixed part of the sealed bearing assembly.

There are many other variations possible for constructing a sealed bearing having a throw-off bushing with rims and corresponding grooves but these variations are also covered by the sealed bearing assembly of the present invention.

## Claims

1. A sealed bearing assembly comprising
- an outer ring (18) and an inner ring (9) of the bearing;
- a throw off-bushing (10), arranged coaxially with the inner ring, the throw-off bushing and the inner ring being suited to accept an axle;
- one or more circular rims (11), provided on the throw-off bushing (10);
- one or more circular grooves (12), provided in the part of the sealed bearing assembly surrounding at least partially the throw-off bushing (10);
- whereby each of the one or more circular grooves (12) is provided in front of a corresponding rim (11).

2. A sealed bearing assembly according to claim 1, whereby each of the one or more grooves (12) is provided with a pocket (13), the pockets communicating with a draining hole (14).

3. A sealed bearing assembly according to any of the previous claims whereby the one or more rims (11) have a triangular section.

4. A sealed bearing assembly according to one of the previous claims, whereby the one or more rims are forming a labyrinth together with the one or more grooves.

5. A sealed bearing assembly according to one of the previous claims, an O-ring (8) is provided between a fixed part of the sealed bearing assembly and the inner ring (9).

6. A sealed bearing assembly according to one of the previous claims, whereby a slight non-parallelism is provided between the exterior surface of the throw-off bushing (10) and the interior surface of the opening in a fixed part of the sealed bearing assembly, receiving the throw-off bushing (10).

## Amended claims

### Amended claims in accordance with Rule 137(2) EPC.

1. A sealed bearing assembly comprising
- an outer ring (18) and an inner ring (9) of the bearing;
- a throw off-bushing (10), arranged coaxially with the inner ring, the throw-off bushing and the inner ring being suited to accept an axle;
- one or more circular rims (11), provided on the throw-off bushing (10);
- one or more circular grooves (12), provided in the part of the sealed bearing assembly surrounding at least partially the throw-off bushing (10);
- whereby each of the one or more circular grooves (12) is provided in front of a corresponding rim (11); and
- whereby an O-ring (8) is provided between a fixed part of the sealed bearing assembly and the inner ring (9).

2. A sealed bearing assembly according to claim 1, whereby each of the one or more grooves (12) is provided with a pocket (13), the pockets communicating with a draining hole (14).

3. A sealed bearing assembly according to any of the previous claims whereby the one or more rims (11) have a triangular section.

4. A sealed bearing assembly according to one of the previous claims, whereby the one or more rims are forming a labyrinth together with the one or more grooves.

5. A sealed bearing assembly according to one of the previous claims, whereby a slight non-parallelism is provided between the exterior surface of the throw-off bushing (10) and the interior surface of the opening in a fixed part of the sealed bearing assembly, receiving the throw-off bushing (10).
